# EUROPEAN PATENT APPLICATION

(11) **EP 4 589 270 A1**
(43) Date of publication of application: **23.07.2025**
(21) Application number: 24153149.0
(22) Date of filing: 22.01.2024
(51) Int. Cl.: G01J 3/02, G01J 3/28, G01J 3/453, G01J 9/02

(54) **INTEGRATED OPTICAL SPECTROMETER**

(71) Applicant: ETH Zurich, 8092 Zurich (CH)
(72) Inventor: The designation of the inventor has not yet been filed
(74) Representative: Dittrich-Megej, Christina

(57) **Abstract**

An integrated optical spectrometer (IC), comprises: an optical subsystem (1) for generating counterpropagating waves (w1, w2) of a wave (w), an interferometric waveguide section (21) which is configured to receive the counterpropagating waves (w1, w2) for generating an interferometric wave (IF), a plurality of photoelectric detectors (22) for generating electrical signals representing an interferogram of the interferometric wave (IF), an electronic subsystem (3) which is connected to the photoelectric detectors (22) for processing the electrical signals representing the interferogram of the interferometric wave (IF) in order to determine a spectrum of the wave (w).

## Description

### FIELD OF THE INVENTION

The present invention relates to an integrated optical spectrometer.

### BACKGROUND ART

Optical spectrometers extract information out of the visible or infrared electromagnetic spectrum and have various applications such as in food grade control, biomedical sensing, chemical sensing, astrophysics, etc. Most often, current implementations use dispersive (grating or prism) or Fourier transform spectrometers. These solutions require free-space components with large footprints and suffer from high costs.

Standing wave Fourier transform spectrometers enable more compact footprints. Self-interference of counterpropagating waves provides the spectral information without the need for a large free propagating region. However, current implementations rely on the far-field scattering of the standing wave, which is inefficient and requires precise adjustment of free-space components.

WO2007017588A1 discloses a Fourier transform spectrograph using contra-propagative waves. The spectrograph comprises a waveguide with two accesses, a means for injecting two counter-propagating guided waves by each of said accesses so as to create a spatial interference within said guide means for detecting the energy of the evanescent wave of the guided field resulting from the interference of said counter-propagative waves. The interferogram located in the guide is accessed via the evanescent wave. The detection means can comprise at least one plane guide located near said guide and at least one photodetector arranged to detect a wave at the output of said plane guide. The detection means can comprise a plurality of local detectors distributed between the two accesses of said guide. Detectors, scattering points or bolometers can be placed at the surface of the guide, which are sensitive to a fraction of the field present inside the guide.

Optical spectroscopy according to the state of the art requires spectrometers which are large in size, e.g. have the size of benchtop lab-instruments. Miniature spectrometers according to the state of the art still rely on free space components. According to the state of the art, mass production of spectrometers is not possible. Standing wave integrated Fourier transform spectrometers (SWIFTS) according to the state of the art cannot be widely applied, as the detecting elements are not yet efficient and low cost, because, for example, some implementations require metallic scatterers on top of an interference section of a waveguide, wherein after scattering light is collected using a regular microscope requiring precise alignments down to micrometer scales. Pohl et. al. 10.1038/s41566-019-0529-9 utilizes metallic isotropic scatterers, where at least 50% of the scattered power is lost to the substrate.

### DISCLOSURE OF THE INVENTION

There may be a need for an integrated optical spectrometer. In particular, there may be a need for an integrated optical spectrometer which does not require mechanical adjustments during operation. In particular, there may be a need for an integrated optical spectrometer which has high spectral resolution (<= 0.1 nm) and high sensitivity. In particular, there may be a need for an integrated optical spectrometer which simplifies mass-production.

Such a need may be met with the subject-matter of the independent claims.

Advantageous embodiments are defined in the dependent claims.

Ideas underlying embodiments of the present invention may be interpreted as being based, inter alia, on the following observations and recognitions.

An aspect of the invention relates to an integrated optical spectrometer which comprises: an optical subsystem for generating counterpropagating waves of a wave, an interferometric waveguide section which is configured to receive the counterpropagating waves for generating an interferometric wave, a plurality of photoelectric detectors for generating electrical signals representing an interferogram of the interferometric wave, an electronic subsystem which is connected to the photoelectric detectors for processing the electrical signals representing the interferogram of the interferometric wave in order to determine a spectrum of the wave. The photoelectric detectors and the electronic subsystem can be fabricated using standard CMOS technologies. The interferometric waveguide section and the optical subsystem can be fabricated using materials which are compatible with CMOS technologies. During operation, no mechanical adjustments are necessary, leading to robust operation. Because use of CMOS technologies is enabled, mass-production of the integrated optical spectrometer comprising in particular optical, opto-electronic, and electronic components is enabled.

In some embodiments, the plurality of photoelectric detectors are arranged across, in particular orthogonal to, the interferometric waveguide section. Sensitivity can be improved.

In some embodiments, the photoelectric detectors are arranged at regular intervals.

In some embodiments, the photoelectric detectors are designed to form nanowires. Resolution and sensitivity can be improved.

In some embodiments, the photoelectric detectors are arranged within the evanescent field of the interferometric wave.

In some embodiments, the photoelectric detectors are realized as photodiodes or photoconductors.

In some embodiments, processing the electrical signals representing the interferogram of the interferometric wave includes applying a Fourier-transform.

In some embodiments, the electronic subsystem comprises readout circuits which are connected to the photoelectric detectors, and further comprises control circuits which are connected to the readout circuits.

In some embodiments, the electronic subsystem includes one or more additional integrated circuits. Optimized integrated circuits can be included.

In some embodiments, the optical subsystem comprises a first and a second splitter waveguide section connected to the interferometric waveguide section and further connected to a wave splitter for generating the counterpropagating waves from the wave.

In some embodiments, the optical subsystem further includes a phase shifter for shifting the phase of one of the counterpropagating waves, wherein in particular the electronic subsystem is configured to control the phase shifter.

In some embodiments, the optical subsystem includes one or more additional integrated circuits. Optimized integrated circuits can be included.

In some embodiments, the optical subsystem and the waveguide section conform with one of single-mode operation and multi-mode operation. Resolution or throughput can be improved.

In some embodiments, the integrated optical spectrometer has been fabricated in CMOS technology. Widely available technologies can be used.

In some embodiments, a first layer includes the photoelectric detectors and the electronic subsystem and a second layer includes the interferometric waveguide section and the optical subsystem.

### BRIEF DESCRIPTION OF THE DRAWINGS

In the following, advantageous embodiments of the invention will be described with reference to the enclosed drawings. However, neither the drawings nor the description shall be interpreted as limiting the invention.
Fig. 1 schematically shows an integrated optical spectrometer according to an embodiment of the invention.
Fig. 1a, 1b schematically show a cross-section and a top-view of an interferometric waveguide section and of photoelectric detectors of an integrated optical spectrometer according to an embodiment of the invention.
Fig. 2 schematically shows an integrated optical spectrometer according to another embodiment of the invention.
Fig. 3 schematically shows an integrated optical spectrometer according to a further embodiment of the invention.

The figures are only schematic and not to scale. Same reference signs refer to same or similar features.

### MODE(S) FOR CARRYING OUT THE INVENTION

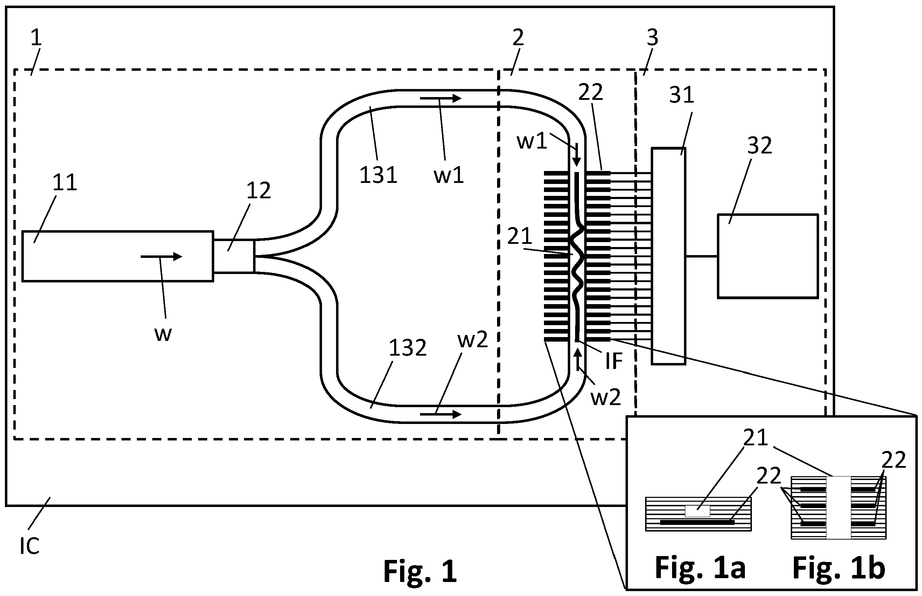

Fig. 1 schematically shows an integrated optical spectrometer IC according to an embodiment of the invention. For example, the integrated optical spectrometer IC is a CMOS device. The integrated optical spectrometer IC comprises an optical subsystem 1, an opto-electric subsystem 2, and an electronic subsystem 3.

The opto-electric subsystem 2 comprises an interferometric waveguide section 21 which is configured to receive counterpropagating waves w1, w2, which are generated (by the optical subsystem 1) from a wave w to be analyzed, for generating an interferometric wave IF. The opto-electric subsystem 2 comprises a plurality of photoelectric detectors 22 for generating electrical signals representing an interferogram of the interferometric wave IF. The electronic subsystem 3 is connected to the photoelectric detectors 22 for processing the electrical signals representing the interferogram of the interferometric wave IF in order to determine a spectrum of the wave w, in particular an electromagnetic spectrum.

The spectrum can include information about the irradiance of the wave w for a range of wavelengths, in particular spanning from visible to infrared frequencies.

Fig. 1a schematically shows an enlarged cross-section of the interferometric waveguide section 21 and a photoelectric detector 22. Fig. 1b schematically shows an enlarged top-view of the interferometric waveguide section 21 and photoelectric detectors 22. In some embodiments, the photoelectric detectors 22 are arranged in a first physical layer and the interferometric waveguide section 21 is arranged in a second physical layer. In some embodiments, the second physical layer is arranged above the first physical layer.

For example, the photoelectric detectors 22 and the electronic subsystem 3 are arranged in the first physical layer, and the optical subsystem 1 and the interferometric waveguide section 21 are arranged in the second physical. For example, in first fabrication steps for fabricating the first physical layer, the photodetectors 22 and the electronic subsystem 3 are fabricated by utilizing standard CMOS processing technologies, which can achieve state-of-the-art noise figures. In order to achieve the integration of optical subsystem 1 and the waveguide section 22 together with the photodetectors 22 and the electronic subsystem 3, in second fabrication steps for fabricating the second physical layer, the optical subsystem 1 and the waveguide section 22 are fabricated from transparent materials such as silicon nitride or silicon oxynitride in back-end-of-line processing steps with a low thermal budget, thereby ensuring compatibility with CMOS processing.

A signal to be sampled respectively to be analyzed can be coupled from an external source (not illustrated) to the wave conditioning section 11. The signal to be sampled can relate to all kinds of light, such as visible light, near-infrared light, infrared light, etc. The wave conditioning section 11 can enable grating coupling, edge coupling, etc. Alternatively or additionally, the wave conditioning section 11 can include an on-chip laser source, a frequency comb, a functionalized waveguide for conditioning the wave w to be sampled. The wave w is coupled to the wave splitter 12. The wave splitter 12 generates from the wave w two waves w1, w2, which are coupled via the first and second split waveguide sections 131, 132 as counterpropagating waves w1, w2 into the interferometric waveguide section 21. Within the interferometric waveguide section 21, the counterpropagating waves w1, w2 interfere with each other and form a standing wave pattern, namely the interferometric wave IF. Optical filter elements such as distributed Bragg reflectors, ring resonators, etc. can be arranged prior to the wave splitter 12 to increase the sensitivity for applications that feature a weak spectral response with respect to the optical sampling pump (e.g., Raman, fluorescence of functionalized waveguides). Polarization splitters and/or filters can also be included at this stage, as well as mode filters to filter unwanted higher order waveguide modes.

For example, optical waveguiding elements of the optical subsection 1 and the opto-electric subsection 2 can be fabricated for single mode operation to achieve best resolution. For example, optical waveguiding elements of the optical subsection 1 and the opto-electric subsection 2 can be fabricated for multi-mode operation in order to trade off some spectral resolution for much higher throughput and subsequently higher signal strength.

The electro-optic subsystem 2 comprises the interferometric waveguide section 21 and the photoelectric detectors 22. The interferometric waveguide section 21 can have an elongated form, a bent form, etc. A plurality of N photoelectric detectors 22 can be arranged, wherein N can be as large as several thousand or more. The photoelectric detectors 22 are spaced within the evanescent field of the interferometric waveguide section 21 in order to directly absorb the interferometric wave IF. Adjusting the physical distance between the waveguide section 21 and the photoelectric detectors 22 controls absorption strength. Adjusting the physical distance can allow to absorb 1/Nth of the optical field for maximum system efficiency. The physical distance between the waveguide section 21 and the photoelectric detectors 22 can depend on geometries, materials, etc. The physical distance between the waveguide section 21 and the photoelectric detectors 22 can amount to 20 - 500 nm. The photoelectric detectors 22 can be designed to form nanowires. The photoelectric detectors 22 can be placed orthogonally with respect to the propagation direction of the counterpropagating waves w1, w2, respectively with respect to the interferometric waveguide section 21. The photelectric detectors 22 can have a sub-wavelength cross section for enabling a discrete sampling and/or for maximizing a spectral responsivity, while minimizing dark counts and thus noise. The photoelectric detectors 22 can be fabricated as physical or doping patterned semiconducting or metallic nanowires (Silicon, Ge, III-V, Graphene or other 2D materials) and can be realized as photodiodes or photoconductors. For example, Silicon allows for efficient absorption and minimal scattering in the visible wavelengths range up to around 800 nm, while the higher absorption of Germanium extends this usable window into the infrared up to around 1600 nm. Furthermore, the cross-section shape of the nanowires can be designed to maximize the ratio between absorbed to scattered power. In some embodiments, 2D materials can be used to minimize scattering and thus can be used even with weak absorption. Depending on the size of the nanowires, they themselves can act as an optical filtering element due to Mie-resonances, which enhance or reduces the absorption for certain wavelengths.

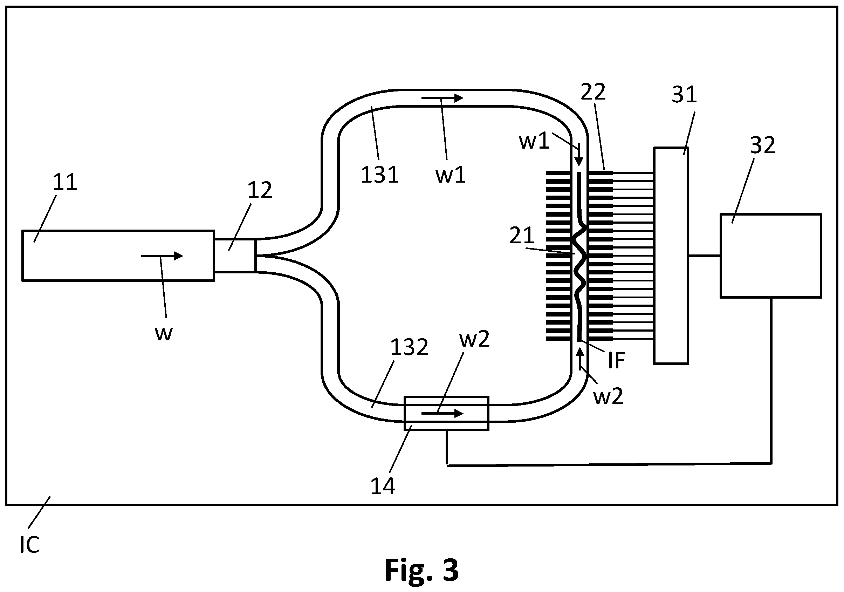

The electronic subsystem 3 can include analog circuits (amplifiers, analog to digital converters, etc.) and/or digital circuits (logic circuits, application-specific integrated circuits, signal processors, memories, etc.), which can be integrated within the same physical layer as the photoelectric detectors 22. The electronic subsystem 3 can include readout circuits 31 (analog) for reading out signals from the photoelectric detectors 22. The electronic subsystem 3 can include control circuits 32 (digital or mixed analog/digital) for controlling and timing the photoelectric detectors 22 and the phase shifter 14, if applicable (cf. Fig. 3 and description below). The electronic subsystem 3 can include circuits for digital signal processing of measurement data, e.g. waveguide dispersion correction, Fourier transformation, etc. Directly integrating the electronic subsystem 3 together with the photoelectric detectors 22 enables a high density of photoelectric detectors 22, a low noise readout, digital processing of measurement data as well as for controlling the phase shifter 14 and readout.

The optical subsystem 1, the electro-optic subsystem 2 and the electronic subsystem 3 allow fabrication of single-chip spectrometers which do not need any physical adjustments during operation.

In some embodiments, the electronic subsystem 3 can be split up into separate integrated circuits IC2, IC3, ..., wherein analog and digital functionalities are carried out on separate, optimized integrated circuits which can be flip-chip-bonded to the integrated circuit IC and the photoelectric sensors 22. Better noise performance and/or faster readout speeds can be achieved.

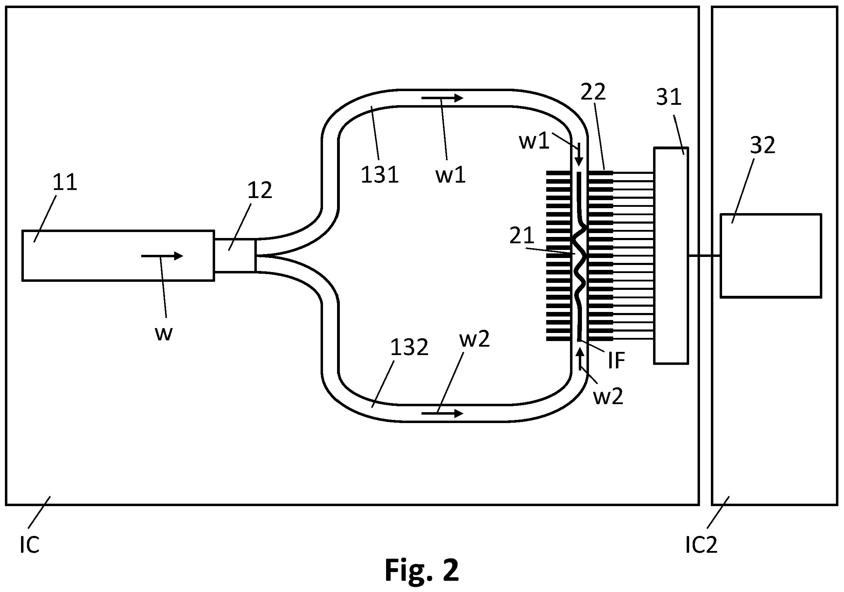

Fig. 2 schematically shows an integrated optical spectrometer according to another embodiment of the invention. Different from the integrated optical spectrometer IC illustrated in Fig. 1, the electronic subsystem 3 is partially arranged on the integrated spectrometer IC (readout circuits 31) and partially arranged on a second integrated circuit IC2 (control circuits 32).

Fig. 3 schematically shows an integrated optical spectrometer IC according to a further embodiment of the invention. Different from the integrated optical spectrometer IC illustrated in Fig. 1, the second split waveguide section 132 includes a phase shifter 14 for shifting the phase of one of the counterpropagating waves w1, w2. The phase shifter 14 can use opto-thermal, electro-optic (Pockels, liquid crystal, etc.), opto-electro-mechanical, or similar effects.

The wave splitter 12 can be designed that the counterpropagating waves w1, w2 have equal power.

In an alternative embodiment, the optical subsystem 1 is configured in accordance with a Lippmann configuration. The wave w is injected into a waveguide, which is ended by a mirror for generating counterpropagating waves w1, w2 from the wave w and for generating the interferometric wave IF.

The optical subsystem 1 and the interferometric waveguide section 2 can be fabricated out of any material that is transparent in the considered wavelength range, e.g. silicon nitride, silicon oxynitride, aluminum nitride, aluminum oxide for visible wavelengths, or e.g. silicon for near-infrared wavelengths.

Materials of the photoelectric detectors 22 can be selected for enhancing and/or extending absorption further towards infrared wavelengths, e.g. silicon, silicon germanium, germanium, or III-V compounds such as indium gallium arsenide, or 2-D materials such as graphene or transition metal dichalcogenides.

The phase shifter 14 can relate to an optically transparent solution, which can be realized with thermal, liquid crystal, electro-opto-mechanical or electro-optic technologies.

Contrary to optical spectroscopy according to the state of the art, the integrated optical spectrometer IC according to the present invention enables a full integration of photoelectric detectors 22 together with an electronic subsystem 3, and thereby mass-production at low costs, as the readout and processing of data is crucial to reconstruct a usable spectrum.

The integrated optical spectrometer IC according to the present invention has smallest footprints and mass-production at low cost is enabled. A single integrated optical spectrometer IC according to the present invention fits into few mm^2 as at for example at visible wavelengths, an interference length of 1 mm (length of interferometric waveguide section 21) is sufficient for achieving a spectral resolution of around 0.1 nm, which is sufficient for a wide range of applications. The integrated optical spectrometer IC according to the present invention is adapted for consumer devices, smartphones, wearable devices, etc.

The integrated optical spectrometer IC according to the present invention has applications in personalized medicine, point of care diagnostics, neonatal jaundice detection, portable spectrometry, portable Raman spectroscopy, etc.

Finally, it should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### LIST OF REFERENCE SIGNS

- IC: integrated optical spectrometer
- 1: optical subsystem
- 2: opto-electric subsystem
- 3: electronic subsystem
- 11: wave conditioning section
- w: wave
- 12: wave splitter
- 131, 132: first and second split waveguide sections
- w1, w2: first and second wave
- 14: phase shifter
- 21: interferometric waveguide section
- IF: interferometric wave
- 22: photoelectric detectors
- 31: readout circuits
- 32: control circuits

## Claims

1. An integrated optical spectrometer (IC), comprising:
an optical subsystem (1) for generating counterpropagating waves (w1, w2) of a wave (w),
an interferometric waveguide section (21) which is configured to receive the counterpropagating waves (w1, w2) for generating an interferometric wave (IF),
a plurality of photoelectric detectors (22) for generating electrical signals representing an interferogram of the interferometric wave (IF),
an electronic subsystem (3) which is connected to the photoelectric detectors (22) for processing the electrical signals representing the interferogram of the interferometric wave (IF) in order to determine a spectrum of the wave (w).

2. The integrated circuit (IC) according to claim 1, wherein the plurality of photoelectric detectors (22) are arranged across, in particular orthogonal to, the interferometric waveguide section (21).

3. The integrated optical spectrometer (IC) according to claim 1 or 2, wherein the photoelectric detectors (22) are arranged at regular intervals.

4. The integrated optical spectrometer (IC) according to one of claims 1 to 3, wherein the photoelectric detectors (22) are designed to form nanowires.

5. The integrated optical spectrometer (IC) according to one of claims 1 to 4, wherein the photoelectric detectors (22) are arranged within the evanescent field of the interferometric wave (IF).

6. The integrated optical spectrometer (IC) according to one of claims 1 to 5, wherein the photoelectric detectors (22) are realized as photodiodes or photoconductors.

7. The integrated optical spectrometer (IC) according to one of claims 1 to 6, wherein processing the electrical signals representing the interferogram of the interferometric wave (IF) includes applying a Fourier-transform.

8. The integrated optical spectrometer (IC) according to one of claims 1 to 7, wherein the electronic subsystem (3) comprises readout circuits (31) which are connected to the photoelectric detectors (22), and further comprises control circuits (32) which are connected to the readout circuits (31).

9. The integrated optical spectrometer (IC) according to one of claims 1 to 8, wherein the electronic subsystem (3) includes one or more additional integrated circuits (IC2, IC3, ...).

10. The integrated optical spectrometer (IC) according to one of claims 1 to 9, wherein the optical subsystem (1) comprises a first and a second splitter waveguide section (131, 132) connected to the interferometric waveguide section (21) and further connected to a wave splitter (12) for generating the counterpropagating waves (w1, w2) from the wave (w).

11. The integrated optical spectrometer (IC) according to one of claims 1 to 10, wherein the optical subsystem (1) further includes a phase shifter (14) for shifting the phase of one of the counterpropagating waves (w1, w2), wherein in particular the electronic subsystem (1) is configured to control the phase shifter (14).

12. The integrated optical spectrometer (IC) according to one of claims 1 to 11, wherein the optical subsystem (1) includes one or more additional integrated circuits.

13. The integrated optical spectrometer (IC) according to one of claims 1 to 12, wherein the optical subsystem (3) and the waveguide section (21) conform with one of single-mode operation and multi-mode operation.

14. The integrated optical spectrometer (IC) according to one of claims 1 to 13, having been fabricated in CMOS technology.

15. The integrated optical spectrometer (IC) according to one of claims 1 to 14, wherein a first layer includes the photoelectric detectors (22) and the electronic subsystem (3) and a second layer includes the interferometric waveguide section (22) and the optical subsystem (1).
